(19)

Europäisches
Patentamt
European
Patent Office
Office européen
des brevets

(11) **EP 3 188 103 A1**

(12) **EUROPEAN PATENT APPLICATION**

(43) Date of publication:
**05.07.2017 Bulletin 2017/27**

(51) Int Cl.:
***G06Q 10/10*** *(2012.01)* ***G06Q 10/06*** *(2012.01)*

(21) Application number: **16207365.4**

(22) Date of filing: **29.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.12.2015 US 201514984532**

(71) Applicant: **Luxembourg Institute of Science and
Technology (LIST)**
**4362 Esch-sur-Alzette (LU)**

(72) Inventors:
• **BAUDET, Alexandre**
**57000 Metz (FR)**
• **LATOUR, Thibaud**
**6700 Arlon (BE)**

(74) Representative: **Lecomte & Partners**
**P.O. Box 1623**
**1016 Luxembourg (LU)**

(54) **METHOD AND DEVICE FOR AUTOMATIC AND ADAPTIVE AUTO-EVALUATION OF TEST
TAKERS**

(57) The invention provides an automatic computer-based method for efficient auto-evaluation of test takers. A computer-system for implementing said method based on the generation of dichotomous test questions or statements is also proposed.

Fig. 1

EP 3 188 103 A1

## Description

## Background

The present method allows for automatic computer-based generation of questionnaires that aim at evaluating a test taker with respect to a set of competencies. Known systems for evaluating test takers rely on the manual design of pertinent questions, and generally on the presentation of multiple choice questions for gathering the test takers input. Such known methods are both time consuming and the design of pertinent questions, which largely depend on the context and on the competencies that are tested, is onerous. Moreover, by using multiple-choice questions involving a rating scale for providing a reply, the test taker, in full knowledge of the rating scale, tends to over-estimate or under-estimate him/herself, leading to distorted evaluation results.

## Brief Summary of the invention

Embodiments of the present invention provide a computer implemented method for gathering a user's or test taker's response to a principal question or statement using a computer system. The question or statement allows a response that is mappable to a scale ranging from 0 to N, N being an integer. The method comprises the following steps:

a) providing said principal question or statement in a memory element of said computer system;

b) generating, using a dichotomous question or statement generator of said computer system starting from said principal question or statement, for each level 1 to N of said scale one dichotomous question or statement allowing a yes/no or true/false response, resulting in a set of N-1 dichotomous questions or statements, each one associated to one level of said scale, and storing said dichotomous questions or statements in a memory element of said computer system;

c) sequentially displaying at least a subset of said dichotomous questions or statements on a display device of said computer system, together with a user prompt for providing a user's response into the computer system, and storing the user's responses to each displayed dichotomous question or statement in a memory element of the computer system;

d) processing, using a processor of said computer system, the recorded responses to said displayed dichotomous questions or statements, in order to automatically conclude to the user's response to said principal question, and storing said answer in a memory element.

The sequencing of the displayed dichotomous questions or statements may preferably depend on the responses given by a user to previously displayed dichotomous questions or statements of the same set of dichotomous questions or statements, i.e., stemming from the same principal question or statement. The first displayed dichotomous question may preferably be selected randomly among the set of dichotomous questions or statements. Alternatively, the first displayed dichotomous question or statement may be selected in accordance with a predetermined rule or heuristics.

Preferably, the generated dichotomous questions or statements may be displayed in a sequence corresponding to increasing levels of the scale to which they are associated.

The generated dichotomous questions or statements may preferably be displayed in a sequence so that depending on the positive or negative response to a previously displayed dichotomous question associated with a given level on the scale, the next dichotomous question that is displayed is one of the remaining unanswered dichotomous questions, which is associated with either a lower or higher level on the scale, respectively.

Preferably, the generated dichotomous questions or statements may be displayed in a sequence corresponding to increasing levels of the scale to which they are associated, and wherein the dichotomous question or statement associated with a given level of the scale is displayed only if all dichotomous questions or statements associated with lower levels of said scale have been answered with the same answer.

The principal question may preferably relate to a state of a user to which the question is directed. The state may comprise a competency, knowledge, know-how, an opinion or a sentiment.

Preferably, answers or responses to a plurality of principal questions forming a questionnaire may be gathered using steps a-d. The dichotomous questions or statements relating to a specific principal question are preferably displayed interleaved in sequence with the dichotomous questions or statements relating to other principal questions of said plurality of principal questions. The interleaved sequencing may be randomized or may follow a predetermined rule or heuristics.

The plurality of principal questions forming the questionnaire may preferably be automatically generated by a parser of said computer system from a textual competency document provided in a memory element of said computer system, the competency document providing a plurality of skill, knowledge, behavioral or technical requirements. The competency document may for example provide a job description.

The method may preferably be implemented as a Web service, which is accessible through a Web browser connected to said Web service using a communication network, said Web browser implementing the display device on which said dichotomous questions or statements, and said user prompt, are displayed.

According to further embodiments of the invention, there is provided a computer system, comprising one or more processors, system memory and one or more physical computer-readable media having stored thereon computer-executable instructions that, when executed by a processor, cause the computer system to implement the steps of the method according to the invention, as described here above.

The display means may preferably be connected to the processor via a communication network, so that the test taker's location may be physically remote from the processor.

According to further embodiments of the invention, there is provided a computer program comprising computer-executable instructions, which, when executed by a processor of a computer system, cause that computer system to carry out the method according to the invention, as presented here above.

According to further embodiments of the invention, there is provided a computer program product comprising a computer-readable medium on which a computer program comprising computer-executable instructions is stored, wherein said computer-executable instructions, when executed by a processor of a computer system, cause that computer system to carry out the method in accordance with the invention, as presented here above.

According to further embodiments of the invention, there is provided a device for questioning a user, comprising a computer data processing unit configured for executing the method according to the invention as presented here above; a display for displaying to the user the at least one subset of dichotomous questions or statements; and an input interface enabling the user to input responses to the displayed dichotomous questions or statements.

Such a device provides an improvement in the collection of data from users, essentially in that the accuracy of the answers provided is higher and the time spent by the users at answering questions is shorter.

Embodiments of the invention allow reducing the overall development cost of designing auto-evaluation tests based on generic textual descriptions. The automatic parsing of textual descriptions and automatic generation of a questionnaire greatly reduces overall costs. Further, the obfuscation of a response scale, which is kept hidden from the test taker, allows increasing the accuracy of the test results, by avoiding the tendency of a test taker to over-evaluate or under-evaluate himself. This is achieved by presenting only dichotomous questions or statements, i.e., allowing a yes/no or true/false answer to the test taker. The computer-based adaptive presentation sequence of the dichotomous questions, which takes into account responses given to previously presented questions or statements, allows the test to converge quickly while increasing the accuracy of the obtained results.

These and other objects and features of the present invention will become more fully apparent from the following description and appended claims, or may be learned by the practice of the invention as set forth hereinafter.

**Brief description of the drawings**

To further clarify the above and other advantages and features of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specificity and detail through the use of the accompanying drawings in which:

- Figure 1 illustrates the main steps of a method according to a preferred embodiment of the invention;
- Figure 2 schematically illustrates a computing system or device according to a preferred embodiment of the invention.
- Figure 3 provides an illustration of a framework of a job description represented by a two-dimensional manifold (formed by the Cartesian product of the two ordered sets 'Target' and 'Action') hierarchically organized according to two levels of tasks and activities, respectively. The items are represented by circles on the bottom level. The framework relates to a particular embodiment in accordance with the invention.

**Detailed description of the preferred embodiments**

The following description sets out preferred embodiments of the invention without limiting the scope of the invention thereto. Features described in detail in the context of a specific embodiment may be combined with features described in the context of other embodiments, unless the contrary is expressly stated.

In the context of the present invention a "principal question or statement" describes a question or statement that allows a response mappable to a scale ranging from 0 to N, N being an integer. For example a principal question may be formulates as "How good are you at managing other people?" and the answer may be mappable to the scale or range comprising the five items "very bad, bad, good, very good, excellent", wherein each scale item maps to an integer from 5. In accordance with an aspect of the invention, a test taker whose response to a principal question should be gathered, is presented sequentially with the elements of a set of up to N-1 dichotomous questions or statements, each allowing a yes/no or true/false question. The questions or statements are presented on at a time. In the context of the above example, a dichotomous statement corresponding to the scale item "bad" may be formulated as "I am bad at managing other people.". This allows for a true/false answer. While it is possible to gather the test taker's response to the underlying principal question by gathering his/her response to the corresponding N-1 dichotomous statements, a subset of these statements is preferably sufficient, as outlined here below.

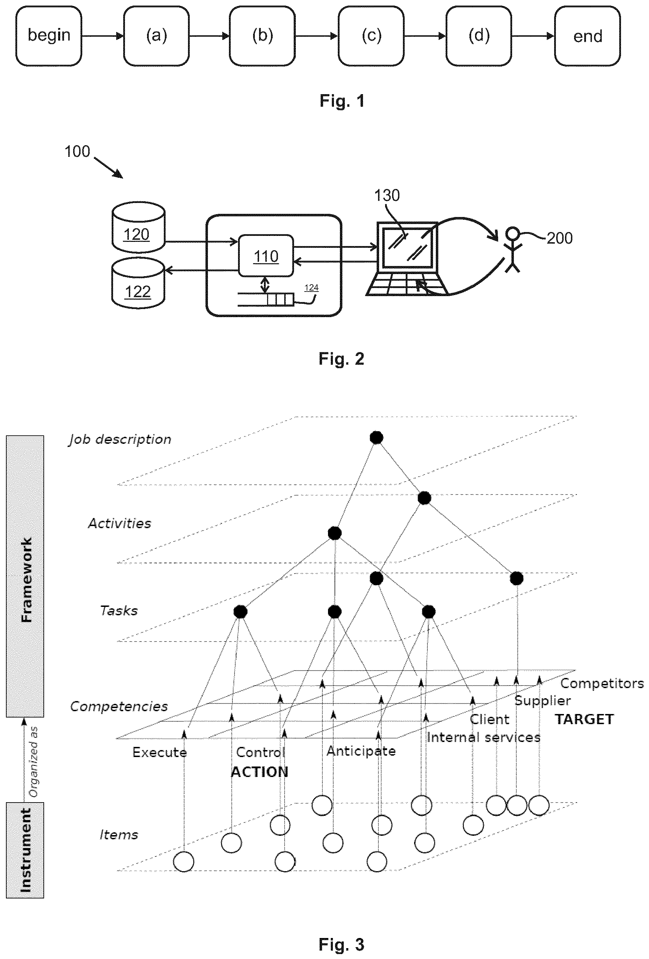

Figure 1 depicts a workflow indicating the main steps of the method according to a preferred embodiment of the invention. At step (a) the principal question or statement is provided in a memory element of a computer system. Preferably, the principal question or a plurality thereof may be automatically generated beforehand by a parser of the computer system, for example based on a generic description of the competencies that are to be tested. Such parsers are well known in the art and will not be described in further detail in the context of the present invention.

At step (b), a dichotomous question or statement generator of the computing system generates, starting from said principal question or statement, for each level 1 to N of said scale one dichotomous question or statement allowing a yes/no or true/false response, resulting in a set of N-1 dichotomous questions or statements, each one associated to one level of said scale. The resulting set of dichotomous questions or statements is stored in a memory element of said computer system. The specific display sequence is dependent on the responses given by the test taker.

At step (c), the computer system sequentially displays at least a subset of said dichotomous questions or statements on a display device of said computer system, together with a user prompt for providing a user's response into the computer system, and storing the user's responses to each displayed dichotomous question or statement in a memory element of the computer system. The computing system waits until the test taker provides his/her input before displaying the following dichotomous question or statement. For example, depending on the positive or negative response to a previously displayed dichotomous question associated with a given level on the scale, the next dichotomous question that is displayed is one of the remaining unanswered dichotomous questions, which is associated with either a lower or higher level on the scale, respectively. Other heuristic rules are within the scope of the invention and will be thoroughly presented here below. Such measures allow reducing the overall number of presented dichotomous question or statements, decreasing thereby the overall testing time.

Once a convergence or stopping criterion is reached, the method continues at step (d), wherein, using a processor of said computer system, the recorded responses to said displayed dichotomous questions or statements are processed in order to automatically conclude to the user's response to said principal question, and storing said answer in a memory element. It should be clear to the skilled person that the dichotomous question or statement generator as well as the processor may be implemented by a programmable central processing unit, CPU, of a computing device as such known in the art, provided that the CPU is executing computer readable instructions implementing the corresponding method steps.

In practice a test taker is required to provide responses to a questionnaire comprising a plurality of principal questions as outlined here above. The corresponding generated plurality of sets of dichotomous questions or statements needs to be presented to the test taker in such a case. The overall sequencing of the dichotomous questions or statements, i.e., the sequencing not only within a set that relates to a particular principal question, but rather the sequencing with respect to all dichotomous questions/statements relating to the entire questionnaire, may comprise interleaving of dichotomous questions or statements stemming from different principal questions or statements. The interleaving may be randomized or specific heuristics may be applied as described further here below. The advantageous effect of this measure lies in that the scales associated with each underlying principal questions or statements become further obfuscated from the test taker. If the test taker is presented first with a dichotomous question or statement relating to a first principal question or statement, and then he is presented with a second dichotomous question or statement relating to the same first principal question or statement only after having provided input to other questions in between, his/her inputs related to the first principal question or statement become less correlated and therefore more accurate.

Figure 2 schematically shows a computer system 100 useful for implementing the above outlined method steps. The computer system 100 comprises a processing unit 110 configured to execute the method steps. Preferably, the corresponding instructions are read from a memory medium 124, which may for example comprise RAM memory. The computer system has at least read access to a memory element 120, which may be structured as a database. The memory element 120 may be physically collocated with the processing unit 110, or it may be remote. In the latter case, it is accessible by the processing unit 110 through a communication network. The memory element 120 comprises a principal question or statement, or a questionnaire grouping a plurality thereof. The computer system further comprises a display terminal 130 useful for displaying the generated dichotomous questions or statement to a test-taker or user 200. The test-taker 200 provides a response to each displayed question or statement using computer input means. The input is communicated back to the processing unit which processes it. The display unit may be physically collocated with the processing unit. Alternatively it may be remote and accessible to the processing unit through a communication network. In a preferred embodiment, the processing unit is part of a Web server, while the display 130 is the display of a user's computing device, which accesses the Web server. The method is in such a case implemented as a Web service. The provision of Web servers and communication network achieving the described purposes is as such known in the art. Once the processing means 110 have processed all the input from the test-taker 200, they store the result, i.e., the test-taker's inferred response to at least one principal question, in a memory element 122, which may be separate from the memory element 120, or which may be the same memory element.

*1 Introduction to a particularly preferred embodiment of the method according to the invention*

In what follows, a particularly preferred embodiment of the invention is formally set out in a non-limiting manner.

*2 Cumulative Scale Items*

In this section, the concept of Cumulative Scale Item, CSI, and its structure are defined. A CSI is an item enabling collecting a declarative value (in case of a declarative item without scoring) or collecting a score (in the case of a scored item) along a scale which is hidden to the respondent.

In the case of declarative items, it replaces a classical Likert Scale Item, LSI, with $N$ discrete levels comprised in the $[0, N]$ interval by $N-1$ yes/no questions. Similarly, in the case of scored items, it replaces a partial credit multiple choice, MCQ, item with $N$ distractors each associated with a unique integer score comprised in the $[0, N]$ interval by $N-1$ Dichotomous Scored Items, DSI. More generally, a CSI can be any set of subcomponents returning dichotomous scores (0 or 1) that are ordered on a scale associated to the global component. CSI principles can be used in any situation where the global score, corresponding to a test taker's response to a global question or statement, is obtained by the cumulative collection of evidences that position the candidate on a scale or a sub-scale until a condition is not met and is consequently considered as a stopping point.

A given level in the scale can be attained only if all the lower levels have been achieved for scales ordered in increasing order. This departs from the more classical situation where each piece of evidence (that can be represented by an item or a sub-part of a test) is independent of the others. In such independent situation, the global score is often obtained by summing up the sub-element scores. In CSI where all sub-elements are dependent of their ordering along the scale, the global score is obtained by considering the rank of the highest collected evidence. As a consequence, the CSI mechanism enables creating adaptive testing using the rank of sub-elements on the scale as adaptation criteria. The advantage of the CSI mechanism is that it enables adaptive testing without calibration based on pilot testing, provided that all elements are related to a framework built on ordered cumulative dimensions.

In theory, classical scored items with any arbitrary type of response mode (MCQ, gap match, association, etc...) can be associated with a component of a CSI in a composite item. The algorithm will thus follow the response scheme of the sub-items corresponding to the CSI sub-components. An example of this would be classical scored items coupled with a certainty scale, the latter being organized as a CSI instead of a single Likert scale. Applying the CSI principle would lead to asking different questions that accumulate evidences on a skill until a stable certainty level has been found.

*2.1 Definition*

A given CSI $i$ corresponds to a top component $Q_i$ for which the score $S_i$ is an integer value on a scale ranging in the $[0, N_i]$ interval. To each level $j$ of the scale is associated a sub-component $Q_{ij}$ that returns a dichotomous score $S_{ij} = \{0,1\}$, with $j = 1, ...., N_i$. The sub-components form an ordered set according to the scale, the rank of each sub-component corresponding to a level $j$ of the scale.

In the context of the invention, a "top component" is also referred to as a "principal question or statement". A "sub-component" corresponds to a "dichotomous question or statement", which is generated based on a corresponding "top component" or "principal question or statement."

Assuming an ascending scale (as can be found in the vast majority of cases) and considering $Q_{ij}$ as a yes/no item, i.e., when the respondent needs to accumulate 'yes' or correct answers until a 'no' or incorrect answer is given, the score $S_{ij}$ is 0 for a negative or incorrect answer and the score of the sub-component $S_{ij}$ is 1 for a positive or correct answer. The score $S_i$ is the highest level attained with all correct or 'yes' answers being accumulated until the stop point (an incorrect or 'no' answer) is reached, in other words, the score $S_i$ is the highest rank attained along the scale. There is no subcomponent $Q_{i0}$ since $S_i = 0$ is inferred from a negative answer ('no' or incorrect) to the $Q_{i1}$ subcomponent, whereas a 'no' or incorrect response to a hypothetical $Q_{i0}$ sub-component would lead to an inconsistent score lying out the scale range. The $S_{ij}$ scores for $Q_{ij}$ sub-components are summarized in Table 1.

Table I: Correspondence between item types, answers and scores in Cumulative Scale Items, CSI.

| $Q_{ij}$ **Item type** | $Q_{ij}$ level coverage | **Answer** | $S_{ij}$ |
|---|---|---|---|
| Yes/No item | | 'yes' | 1 |
| | $j = 1 \cdots N_i$ | 'no' | 0 |
| Dichotomous scored item | | Correct | 1 |
| | | Incorrect | 0 |

*2.2 Scoring*

The score $S_i$ of the top component $Q_i$ is obtained by successively presenting the subcomponents $Q_{ij}$ to the candidate and collecting their scores $S_{ij}$. At each step $t$, with $j \in [1, N_i]$ different for each $t$, the instantaneous score $S_i(t)$ is given by:

$$S_i(t) = j + s_{ij} - 1 \qquad \forall j = 1 \cdots N_i \tag{1}$$

The $S_i$ score computation is a particular case of the more general template consisting in adding the scores $S_{ij}$ of the subcomponents. In accordance with embodiments of the invention, obtaining the component score as a function of the rank of the subcomponents where answers change is only feasible because the subcomponents are members of an ordered set along the scale. This feature is particularly useful to collect $S_i$ adaptively.

*2.3 Adaptation*

The score $S_i$ of the component $Q_i$ can be obtained in several ways, benefitting from the ordered property of the subcomponents.

*2.3.1 General heuristics*

To explore a component $Q_i$, the test driver or computer system presents successively the subcomponents $Q_{ij}$ to the candidate or test taker. Each step is denoted by $t$, starting from $t = 0$. At start, the driver sets the lower level and the upper level bounds for the first level selection. At all other steps, the driver first selects a level $j$ within the current bounds, then presents the corresponding $Q_{ij}$ subcomponent and collects the response. Depending on the collected score $S_{ij}$, it calculates the instantaneous score $S_i(t)$ and checks the convergence criteria. If no convergence is reached it calculates the new bounds for a new cycle. The general algorithm is presented here under.

$t = 0$ : 0. Set starting level boudaries
$t > 0$ : *Loop until convergence*

  1. Select $j$
  2. Present question to the candidate and collect score $S_{ij}$
  3. Compute score $S_i(t)$ and store it
  4. Check convergence
  5. If ¬ converged, recompute boundaries depending on $S_{ij}$

All steps of the general algorithm can have various implementations, depending on the kind of CSI adaptation heuristics that is selected. The various alternatives are presented further in this subsection.

*2.3.2 Convergence*

The sub-component $Q_{ij}$ of $Q_i$ exploration converges to the final score $S_i$ when the instantaneous score $S_i(t)$ of the component obtained from responding to a current sub-component is equal to one of the previously calculated instantaneous score of the component or one of the extreme values of the scale. This is given by:

$$S_i = S_i(t) : \left\{ \begin{array}{l} S_i(t) = 0 \\ S_i(t) = N_i \\ S_i(t) = S_i(t' < t) \end{array} \right. \tag{2}$$

### 2.3.3 Divide and conquer heuristics

At each step *t*, divide and conquer methods restrict the selection range from which the next question is selected to a sub-range of the scale depending on $S_i(t)$. In each sub-range of the scale, two variants exist for the selection of *j*: at random, or selecting the middle of the sub-range.

Random bisection

The random bisection algorithm consists in selecting randomly a level within an upper or a lower slice of the scale with value higher or lower than the instantaneous score $S_i(t)$, respectively. For a test component $Q_i$ the algorithm is described here under, assuming an ascending scale.

$$
\begin{aligned}
t = 0 \quad &: \quad 0.\ L_i(0) = 1,\ U_i(0) = N_i \\
t > 0 \quad &: \quad Loop\ until\ convergence \\
&\qquad 1.\ j = rand(L_i(t-1), U_i(t-1))|j \in \mathcal{N} \\
&\qquad 2.\ \text{get } s_{ij} \text{ for } Q_{ij} \\
&\qquad 3.\ \text{Store } S_i(t) = j + s_{ij} - 1 \\
&\qquad 4.\ \left| \begin{array}{l} \text{If } S_i(t) \in \{S_i(t' < t), 0, N_i\} \ \rightarrow\ S_i = S_i(t) \Longrightarrow\ \text{Converged} \\ \text{Otherwise:} \left| \begin{array}{ll} \text{if } s_{ij} = 1 \ \rightarrow\ L_i(t) = S_i(t)+1, & U_i(t) = U_i(t-1) \\ \text{if } s_{ij} = 0 \ \rightarrow\ L_i(t) = L_i(t-1), & U_i(t) = S_i(t) \end{array} \right. \end{array} \right.
\end{aligned}
\tag{3}
$$

where, $L_i(t)$ and $U_i(t)$ are lower and upper bounds of the range of question $Q_i$ at time *t* for level *j* selection, respectively.

Dichotomy search

The search for the competency level is made by selecting the middle level *j* of a range and ask the question to collect the answer. Depending on the answer, the next level *j* to be explored correspond to the mid-range of either the upper or the lower unexplored range of *j* until convergence is reached. When $N_i$ is large, this algorithm converges more rapidly in average than the random bisection. However, when the test is to be repeated many times with the same candidate, the bisection yields to more similar question sequences for a given competency level than the other. The dichotomy algorithm corresponds to:

$$
\begin{aligned}
t = 0 \quad &: \quad 0.\ L_i(0) = 1,\ U_i(0) = N_i \\
t > 0 \quad &: \quad Loop\ until\ convergence \\
&\qquad 1.\ j = \left\lceil \frac{U_i(t-1) + L_i(t-1)}{2} \right\rceil \ or\ j = \left\lfloor \frac{U_i(t-1) + L_i(t-1)}{2} \right\rfloor \\
&\qquad 2.\ \text{get } s_{ij} \text{ for } Q_{ij} \\
&\qquad 3.\ \text{Store } S_i(t) = j + s_{ij} - 1 \\
&\qquad 4.\ \left| \begin{array}{l} \text{If } S_i(t) \in \{S_i(t' < t), 0, N_i\} \ \rightarrow\ S_i = S_i(t) \Longrightarrow\ \text{Converged} \\ \text{Otherwise:} \left| \begin{array}{ll} \text{if } s_{ij} = 1 \ \rightarrow\ L_i(t) = S_i(t)+1, & U_i(t) = U_i(t-1) \\ \text{if } s_{ij} = 0 \ \rightarrow\ L_i(t) = L_i(t-1), & U_i(t) = S_i(t) \end{array} \right. \end{array} \right.
\end{aligned}
\tag{4}
$$

### 2.3.4 Stepwise heuristics

Stepwise methods do not cut the level search space into slices around the instantaneous score $S_i(t)$ as in divide and conquer searches. In stepwise methods, the level $j$ that is explored at the next cycle is one of the neighbors of the instantaneous score $S_t(t)$. Doing so, stepwise methods can be seen as a relaxation of the explored level until convergence is reached, following either an increasing or decreasing path along the scale starting from the first answer. There exist three variations in the stepwise methods depending on the starting boundaries: starting from the middle of the scale, randomly, and from an extremum. The general algorithm is given by:

$$
\begin{aligned}
&t = 0 \quad : \quad \text{0. Select starting boundaries } L_i(0) = U_i(0) \\
&t > 0 \quad : \quad \textit{Loop until convergence} \\
&\qquad\qquad\quad 1.\ j = L_i(t-1) = U_i(t-1) \\
&\qquad\qquad\quad 2.\ \text{get } s_{ij} \text{ for } Q_{ij} \\
&\qquad\qquad\quad 3.\ \text{Store } S_i(t) = j + s_{ij} - 1 \\
&\qquad\qquad\quad 4.\ \left| \begin{array}{l} \text{If } S_i(t) \in \{S_i(t' < t), 0, N_i\} \ \rightarrow\ S_i = S_i(t) \implies \text{Converged} \\ \text{Otherwise: } \left| \begin{array}{lll} \text{if } s_{ij} = 1 & \rightarrow & L_i(t) = U_i(t) = S_i(t) + 1 \\ \text{if } s_{ij} = 0 & \rightarrow & L_i(t) = U_i(t) = S_i(t) \end{array} \right. \end{array} \right.
\end{aligned}
\tag{5}
$$

Starting boundaries from the middle of the scale Starting at $t = 0$ from the middle of the scale, $L_i(0)$ and $U_i(0)$ are given by:

$$
L_i(0) = U_i(0) = \left\lceil \frac{N_i + 1}{2} \right\rceil \qquad \text{or} \qquad L_i(0) = U_i(0) = \left\lfloor \frac{N_i + 1}{2} \right\rfloor
\tag{6}
$$

Random starting boundaries

Alternatively, one can start at a randomly selected level $j$:

$$
L_i(0) = U_i(0) = rand(1, N_i) | j \in \mathcal{N}
\tag{7}
$$

Starting boundaries at extremum

Finally, one can start the $j$ level relaxation from either the lowest or the highest level:

$$
L_i(0) = U_i(0) = 1 \qquad \text{or} \qquad L_i(0) = U_i(0) = N_i
\tag{8}
$$

*2.3.5 Random methods*

Random methods explore the $Q_{ij}$ subcomponents randomly without replacement, i.e., without drawing twice the same sub-component. Two variations are possible depending on whether the pseudo-random number generator is a uniform distribution, or if the random number must fit to a target distribution. Using a normal distribution as fitting probability distribution for instance, will tend to explore preferentially the middle level range before exploring low and high values of the range.

*2.4 Discussion about CSI heuristics*

In situations where each component $Q_i$ is independent from all others, divide and conquer algorithms are in general among the best heuristics in terms of convergence speed, even if there exist some cases where stepwise methods converge more rapidly.

When considering the fact that CSI's are used to increase the test reliability by hiding the scale, divide and conquer methods are better than stepwise methods. Indeed, using the latter, the test takers experience the sequence of sub-components in the same order as the scale with adjacent levels. This feature is more prone to reveal the scale than when using divide and conquer heuristics. Purely random methods increase the scale obfuscation, but to the detriment of the convergence speed.

CSI's are constructed to remain general and usable with non CSI-compliant testing systems. Therefore, starting at $j = 1$ using a stepwise heuristics is equivalent to the simple testing procedure where all items as shown successively until a stop condition is reached. Removing the convergence and summing the scores classically finally corresponds to a simple non-adaptive sequential testing procedure with item order preservation. The returned score $S_j$ is identical to the one obtained using the CSI principle. As such, CSI's must be considered as special cases of traditional test parts. Moreover, a test constructed with a set of CSI's can be executed classically without special heuristics, i.e., sequentially, with item score addition as the final test part scoring method.

Such feature guarantees that tests parts structured as CSI can be run in non-CSI compliant systems, and return identical scores.

*3 Hierarchical Framework Probing*

*3.1 Defining the framework and instrument as spaces*

Conceptually, a given assessment framework (the framework is defined as a set of variables and evidences that altogether validate a construct) can be defined by considering many different independent dimensions forming a space, where each dimension corresponds to a particular aspect of the construct. In such a space, every atomic element of the framework represents a point in the space resulting from the combination of values or positions on each space dimension. For instance, one can define a competency framework as an "*Action* performed in a given *Context*, that yields some *Result* for a *Beneficiary*". It is appreciated that the space has four dimensions (*Action, Context, Result, Beneficiary*) and that every single competency is the combination of a particular action among the set of possible actions with a particular context, beneficiary and result among the set of possible contexts, beneficiaries, and results, respectively.

Depending on the nature of the space and dimension properties and characteristics, many different spaces can be defined from a mathematical perspective. In the most constrained situation, the framework can consists in a *N*-dimensional metric space. This would be the case if in the provided example a metric distance could be calculated between every two points that satisfies the classical criteria of a distance (non-negative, zero if two points are identical, symmetric, and compliant with the triangle inequality). The well-known Euclidean space is such a metric space, which would also imply in the provided example that the four dimensions are equipped with a norm (for instance if all possible actions form an ordered set with identical distance between each adjacent neighbors) and are linearly independent (for instance there is no subsets of actions that are possible only for certain beneficiaries). While these types of framework bear interesting properties, they are however unlikely to be easily designed.

In most cases the frameworks are defined as multi-dimensional *manifolds*, i.e., more general *N*-dimensional spaces which locally (at the vicinity of each point) behaves like an Euclidean space. There exist many types of manifolds, but intuitively, the constructs that are the most likely to be designed are formed by the Cartesian product $\otimes$ of N ordered sets $S_n$, i.e., $\boldsymbol{S^N} = \otimes_N S_n$ $(n = 1,..,N)$. The proposed illustrative competency framework is such a manifold if it is assumed that the set of all possible actions is finite and that all individual actions are always considered in the same (arbitrary or not) order. If there are some restrictions that prevent for instance some actions to be performed with some beneficiaries, the framework then forms a N-ary relation R, which is a subset of the Cartesian product $\boldsymbol{S^N}$.

According to embodiments of the invention, any arbitrary framework which is designed in the form of a manifold $\boldsymbol{S^N} = \otimes_N S_n$ constructed by the Cartesian product of independent ordered sets $S_n$, or in the form of a N-ary relation $R \subseteq \boldsymbol{S^N}$ may be considered. More complex structures can be envisioned, with the ordered sets $S_n$ being themselves manifolds and/or relations since Cartesian products of manifolds are themselves manifolds. The simplest framework has one dimension, possibly with a singleton.

To every element of the framework, i.e., the points $\boldsymbol{s}$ of the space, one can associate a series of variables that correspond to observable evidences, and map them with the means to collect them. The atomic evidence collection unit is called an item. All together the evidences and the means to collect them form the instrument. Therefore, a general instrument is formed by a set of items or questions Q mapped to each point $\boldsymbol{s}$ of a framework represented by a space $\boldsymbol{S^N}$, generally in the form of a manifold or a relation. Q returns a score which either corresponds to a degree of compliance between the collected data and the reference data associated to the question, or corresponds simply to the collected data, as is or adjusted.

The simplest instrument corresponds to a set of one or many items mapped on a one-dimensional framework with a singleton, i.e., a test with items that collect evidences for the unique one-dimensional variable that is required to validate the construct.

*3.2 Organizing the framework and instrument as a hierarchy*

In addition to the spatial organization, the framework can also be organized hierarchically. The hierarchy forms a rooted directed tree with nodes corresponding to subspaces (potentially overlapping) and edges correspond to the hierarchical relation. In accordance with embodiments of the invention, it is considered that the hierarchical relation is a partition (or aggregation) of the space (or subspaces). Hence, every upper node in the hierarchy, i.e., nodes that are one step closer to the root than all the lower nodes, bears an aggregation function. As an example, summing and normalizing the scores of the lower nodes is such an aggregation function.

As the space does, the hierarchy can also reflect a structural aspect of the framework. But, contrary to the space, there is no mapping between the tree and the item set. Actually only the items are mapped to the space, while the hierarchy defines successive aggregation of sub-spaces. Hence, from a test structure perspective, only the terminal nodes of the hierarchy contain the items while upper level nodes are simple aggregations of sub-nodes.

The hierarchical and spatial structure of a test is illustrated in Figure 3. In the example, the framework consists in a two-dimensional manifold $S^2$ formed by the Cartesian product of an ordered set of Actions $A$ and Targets $T$, following $S^2 = A \otimes T$. In the provided example, the $A$ and $T$ sets are flat, but nothing prevents one to organize them hierarchically or with any other structure.

Every point $s$ of $S^2$ constitutes a leaf of a hierarchical organization of framework subspaces, to which are attached one or more items forming the instrument. In the example, the space point $s$ = (Anticipate; Competitors) is attached to three items, while all other ones are attached to one item each. From the hierarchical point of view of the framework organization, the space $S^2$ is thus subdivided in a series of subspaces $S^2_m = A_m \otimes T_m$ with $S^2{}_m \subseteq S^2$, $A_m \subseteq A$ and $T_m \subseteq T$. More generally, $S^{N'}{}_m = \otimes_{N'} S_{m,n}$ $(n=1, ..., N')$ with $S_{m,n} \subseteq S^{N'}$ where the dimensionality of the subspace can be lower than the one of the encompassing space, i.e., $N' \leq N$. A total partition $S=\{S^{N'}m\}$ $(m=1, ..., M)$ of the space $S^N$ is a set of $M$ particular subspaces such that $S^{N'}{}_m \cap S^{N'}{}_0 = \emptyset$, $\forall m,n$ $(m \neq n)$ and that $\cup^M{}_m S^{N'}{}_m = S^N.= SN$. The minimal partition $S_{min}=S^N$ is the partition with one and only one subspace corresponding to the full space and the maximal partition $S_{max} = \{s_i\}$ is the partition with the maximum number of subspaces, each corresponding to a single point $s$ of the space.

The subspaces are hierarchically aggregated according to a hierarchy $H$ with levels $H^l$ $(l=1,...,L)$, from the topmost level $l=1$ to the lowest level $l=L$ containing terminal elements. The hierarchy is a directed tree graph $H=\{V, E\}$. with $V=\{V_f\}$, the set of vertices, and $E = \{(V_f; v_g)\}$, the set of edges formed by ordered pairs of vertices where $V_f \prec V_g$, i.e., $V_f$ is closer to the root node than $V_g$. A level $H^l=\{V^l; E^l\}$ is a subgraph of $H$ with $E^l=\emptyset$ ; and $V^l \subseteq V$ such that each vertice of $V^l$ is connected to a vertices of $V^{l-1}$ from $H^{l-1}$ one level up in the hierarchy, i.e., such that $V_f \prec Vg$ $\forall$ $g \neq f$ with $V_f \in V^{l-1}$ and $V_g \in V^l$.

Each level $H^l$ corresponds to a total partition $S^l$ of the space $S^N$ where each vertex of $V^l$ is mapped to a subspace $S^N m \in S^l$, that is, $V \mapsto S^l$. The higher level $H^1$ is the minimal partition of the space, as it has a single vertex in $V^1$ that maps to the partition $S^1=S_{min}=\{S^N\}$ corresponding to the whole $N$-dimensional space. Hence $V^1 \mapsto \{S^N\}$. As a corollary, the lowest level $H^L$ of the hierarchy is the maximal partition of the space $S^N$, as it is composed of nodes that each maps to one and only one point s of the space, i.e., $S^L=S_{max}=\{S_i\}$ formed by all individual points of the space. Hence, $V^L \mapsto \{S_i\}$.

Considering the mapping of each vertex of a given hierarchical level of the tree graph, and considering the relationship that exists between the nodes of each level, it follows that the subspace mapped to a given node of a given level is formed by the union of the subspaces that are mapped to the descendent nodes of the next level down the hierarchy. Therefore, with $H^l=\{V^l,\emptyset\}$ and $V_f \in V^l$, with $H^{l-1}= =\{V^{l-1},\emptyset\}$ and $V_g \in V^{l-1}$, both being subgraphs of $H=\{V, E\}$ with the constraint that $V_f \prec V_g$ $\forall$ $g \neq f$, the definition of the hierarchical levels in the tree; the definition of the total partition of the space $S^N$ in $S^l=\{S^{N'}{}_m\}$ total partitions; and the mappings between the vertices of subgraphs corresponding to hierarchical levels $H^l$ and partitions $S^l$; one defines the hierarchical partition of a $N$-dimensional space $S^N$ according to a directed tree graph $H$ as the set of $L$ total partitions $S^l$ that satisfy the constraint that:

$$\mathbf{S}^{N'}_f = \cup \{\mathbf{S}^{N'}_g : v_g \mapsto \mathbf{S}^{N'}_g \text{ and } v_f \prec v_g\} \, \forall f \neq g \tag{9}$$

Back to the example in Figure 3, the hierarchical partition of the space defined by the Cartesian product of the ordered set of actions $A=\{Execute$, Control, Anticipate$\}$ and the ordered set of targets $T=\{Internal services, Client, Supplier, Competitors\}$ follows a four-level hierarchy. The deepest level $H^4$ is labelled Competencies, $H^3$ is labelled Tasks, $H^2$ is labelled Activities, and the highest level $H^1$ is the root labelled Job description. Each node of $H^4$ corresponds to each individual point $s$ of the space, the maximum partition. The five nodes of $H^3$ correspond to unions of points that are mapped to their descendants. Hence, with $V^3=\{V_1, ..., V_5\}$, one has $V_1 \mapsto S^2_1=\{Execute\} \otimes \{Internal services, Client, Supplier\}$; $V_2 \mapsto S^2_2=\{Control\} \otimes \{Internal services, Client, Supplier\}$; $V_3 \mapsto S^2_3=\{Anticipate\} \otimes \{Internal services, Client, Supplier\}$; $V_4 \mapsto S^2_4=\{Execute, Anticipate\} \otimes \{Competitors\}$; and $V_4 \mapsto S^2_5=\{Anticipate\} \otimes \{Competitors\}$ or the single point $s$=(Anticipate, Competitors). The set of nodes of the $H^3$ level thus maps to the partition $S^3$, i:e:, $V^3 \mapsto S^3=\{S^2_1, S^2_2, S^2_3, S^2_4, S^2_5\}$. One can easily verify that the partition $S^3$ is a total partition of the space $S^2$ since $S^2= \cup^5_{i=1}S^2_i$ and $S^2_i \cap S^2_j=\emptyset$ $\forall$ $i \neq j$; $i, j=1, ...,5$, which means that the union of all subspaces of the partition spans the total space and there is no overlapping between subspaces. Finally, nodes $V_1$ to $V_5$ of the level $H^3$ representing *Tasks* can be optionally labelled for instance as $V_1$: *'Product production and packaging'*, $V_2$: *'Product quality assurance'*, $V_3$: *'Product definition and design'*, $V_4$: *'Marketing and communication'*, and $V_5$: *'Market intelligence'* (not shown in Figure 3 for clarity).

The level $H^2$ is a subgraph of the tree containing two vertices that is called $V_a$ and $V_b$ for convenience, hence $V^2 = \{V_a, V_b\}$. One can check that $H^3$ and $H^2$ are two successive levels of a hierarchy as defined previously. There are three edges involving $V_a$ in the tree with $V_1$, $V_2$, and $V_3$. Its is noted that in all three edges the node $V_a \in V^2$ is closer to the root that the connected nodes of $V^3$, in other words, $V_a \prec V_1$, $V_a \prec V_2$, and $V_a \prec V_3$. The same situation occurs with $V_b \in V^2$ and its connected nodes belonging to $V^3$: $V_b \prec V_4$ and $V_b \prec V_5$. From the hierarchical partition of space definition and the tree structure, one can find the total partition $V^2 \mapsto S^2 = \{S^2_a, S^2_b\}$ where $S^2_a = S^2_1 \cup S^2_2 \cup S^2_3$ and $S^2_b = S^2_4 \cup S^2_5$. $S^2$ is also a total partition of the space $S^2$ with $S^2_a = \{$Execute, Control, Anticipate$\} \otimes \{$Internal services, Client, Supplier$\}$ and $S^2_b = \{$Execute, Control, Anticipate$\} \otimes \{$Competitors$\}$ where $S^2_a \cup S^2_b = S^2$ and $S^2_a \cap S^2_b = \emptyset$. The nodes of $H^2$ can also be labelled (not shown in Figure 3 for clarity), for instance as $V_a$: *'Product planning'* and $V_b$: *'Product marketing'*, corresponding to *Activities.*

The topmost level of the hierarchy contains only one vertex acting as the root of the tree. The node set $V^1$ of $H^1$ is a singleton that maps to the minimal partition of the space. The level corresponds to *Job description* and following the provided example could be labelled 'Product management' (not shown in Figure 3 for convenience).

Rephrasing the framework whose structure is depicted in Figure 3 in plain English, in the context of the 'Product management' *Job description* yields the skill-card represented in Table II.

Table II: Product management hierarchical job description according to the structure illustrated in Figure 3

| Job Description | Activities | Tasks | Competencies |
|---|---|---|---|
| Product Management | Product planning | Product production and packaging | Name1 Name2 Name3 |
| | | Product quality assurance | Name4 Name5 Name6 |
| | | Product definition and design | Name7 Name8 Name9 |
| | Product marketing | Marketing and communication | Name10 Name11 |
| | | Market intelligence | Name12 |

When looking at the instrument, assuming that the questions $Q$ are organized according to he same hierarchy $H$, mapped to every point s of the space, and that a score S is a function of each question, i.e., $S_i = f(Q_i)$, the score associated to each node follows the same constraint as the hierarchical partition of space with the union operator replaced by another arbitrary operator, such as the sum, normalized sum, extremum (min, max, ...) or other relevant operators. Hence, considering the maximal partition $S_{max} = \{S_i\}$ of the space $S^N$, one has $V^L \mapsto S_{max} \mapsto Q$ or $V^L \mapsto \{S_i\} \mapsto \{Q_i\}$. Therefore, $S_i \mapsto Q_i$ and $V_i \mapsto Qi$ with $V_i \in V^L$. The score $S^{l-1}_i$ associated to each node $V_i \in V^{l-1}$ is the aggregation of the scores S'of connected nodes $V_j \in V^l$ one level down the hierarchy such that $V_i \prec V_j$, as expressed in:

$$S^{l-1}_i = \mathcal{O}\left\{ S^l_j : v_j \mapsto Q_j \text{ and } v_i \prec v_j \right\} \ \forall i \neq j \tag{10}$$

starting from $S^L_i = f(Qi)$, and where $O$ is the aggregation operator such as:

$$\text{Sum}: S_i^{l-1} = \sum_{j=1}^{deg(v_i)} S_j^l$$

$$\text{Normalized sum}: S_i^{l-1} = \frac{1}{\sum_{i=1}^{deg(v_k)} S_i^{l-1}} \sum_{j=1}^{deg(v_i)} S_j^l \; ; (\text{with } v_k \prec v_i)$$

$$\text{Product}: S_i^{l-1} = \prod_{j=1}^{deg(v_i)} S_j^l$$

$$\text{Minimum}: S_i^{l-1} = \min_{j=1}^{deg(v_i)} \{S_j^l\}$$

$$\text{Maximum}: S_i^{l-1} = \max_{j=1}^{deg(v_i)} \{S_j^l\}$$

$$\text{lukasiewicz } t-\text{norm}: S_i^{l-1} = \max\left\{0, \left(\sum_{j=1}^{deg(v_i)} S_j^l\right) - 1\right\} \; ; (\text{with } S \in [0,1])$$

$$\text{Bounded sum } t-\text{conorm}: S_i^{l-1} = \min\left\{1, \sum_{j=1}^{deg(v_i)} S_j^l\right\} \; ; (\text{with } S \in [0,1])$$

$$\ldots$$

The questions attached to terminal vertices of the tree can be of any type, including CSI, which are considered as a single item. However, one can also consider any node of the hierarchy as a CSI, provided that the score returned from the aggregation of attached vertices down the hierarchy is dichotomous. In this case, the CSI scoring algorithm is to be considered as the aggregation operator O.

Moreover, the hierarchical organization of the framework can also span more than one job description or competency document. Therefore, the space and tree can reflect the organization of a more general structure describing a set of competency frameworks. In this work, the organization of the framework in space, can be used either as a framework to generate the structure of the evidences to be collected (at design time), or as a framework to further analyze the collected data (at analysis time), or both. At test taking time, i.e., during the test execution, the spatial mapping of the items is not used to drive the test. While compatible with spatial organization, the proposed algorithm relies on the hierarchical part of the framework structure.

*3.3 Probing the hierarchical framework*

In many situations, the systematic exploration of the hierarchy with a depth-first search approach might pose a series of problem. In the proposed self-assessment system, it is postulated that local and global precision is related to the scale obfuscation (yielding to the CSI concept as potential solution) but also to the framework obfuscation which justifies the creation of the HFP algorithm described in this section. Obfuscating the framework has hypothetically three functions: i) increasing scale obfuscation provided by CSI by mixing both CSI adaptive principles and HFP principles; ii) leveling the fatigue effect due to the length of the test on the whole framework by avoiding delivering a full subspace of the framework as a block at the end of the test; and iii) ensuring that every question is sufficiently different from the previous one to hypothetically increase the test taker reflexion.

*4 Candidate self-evaluation simulation*

As presented here above, CSI and HFP are expected to increase the reliability and precision of self-evaluations. To this aim, CSI and HFP rely on a series of main hypothesis used to provide models for simulations.

H1. Obfuscating the scale prevents rating distortion bias (under- or over-estimation, as well as central tendency) in self-evaluation.

H1.1. Adaptation heuristics of CSI's tackle the problem at the level of items.

H1.2. Framework sampling heuristics and path balancing of HFP tackle the problem at the level of the test.

H2. Fatigue effect, when the testing lasts, reduces the precision, which yields to a lowering of the reliability and precision.

H2.1. Convergence and cumulative scale aspects of CSI's reduce the fatigue effect by reducing the number of CSI items that are presented to the test taker.
H2.2. Path truncation in HFP and CSI's in combination reduce the fatigue effect by reducing the length of the test.

H3. Fatigue effect affects more significantly items at the end of the test. Distributing sub-components of a given component along the test mitigates the effect.

Another aspect that is not studied here, which can be somehow related to the fatigue effect, is induced by the repetitive character of the task and the similarity of questions. Over time, the succession of questions increases the cognitive load. As a consequence, items that are only slightly different can be perceived erroneously identical. The test taker then tend to believe that the question has already been asked and provide the same response as he already gave to the mistakenly perceived item instead of responding to the actual one. A possible workaround is to vary the formulation patterns of questions. This has not been studied nor simulated. Great care should be taken here since this may finally reduce the bias to the detriment of cognitive load. In addition, as the same item may be presented in various forms to different test takers, this may question the reliability.
The following provides a description of how one can simulate a set of candidate self-evaluations using a preconfigured distribution of expertise levels in the population and a set of probability distribution for each candidate represents the biases.

*4.1 General principles*

The actual population, along with their effective skill levels is represented by a series of random-generated evaluated skill cards. The choice of the skill card is arbitrary and a generic canonical skill card is used. A first experiment will consider that all skill cards have the same structure and content for all individuals, including the number N of levels for all CSI's, and the mix ratio between CSI and pure Likert Scale Items (LSI). Another experiment will consider that the structure of the skill cards is also randomly generated, including the number of levels per CSI and the mix ratio between CSI's and LSI's.
Each individual will thus be characterized by a set of levels associated to the skill card competencies, and a set of test taker response characteristics. The set of levels associated to the skill card for a given individual is assumed to be the 'true' (or effective, taken as a reference) level that must be measured if the system and respondent are perfect, i.e., they correspond to the perfect expected outcome of the test. The test and test takers are perfect when, using the target levels for a given competency of an individual, the simulation generates a response that exactly leads to the target evaluation. Test taker characteristics are used to introduce controlled biases to the response of the simulated-test taker. The bias perturbs the simulated reference answer by using an operator based on a distribution of test taker response behavior applied on the perfect question answer set up as the target input. Introducing biases to the simulated answers thus generates test outcomes that departs from the target skill-card levels. Repeating the perturbed answering process with various types of algorithms and CSI/LSI replacements enables to compare the method efficiency and potentially highlights the expected benefits of using CSI's instead of LSI's in terms of test reliability and precision.

*4.2 Test taker response behavior characteristics*

*4.2.1 Local rating distortion bias: over- or under-estimating oneself in a given item*

The local over- or under-estimation bias, or self-efficacy sentiment bias, is a component of the rating distortion bias. It corresponds to the local tendency to over- or under-estimate oneself. Locality means that the bias is internal to a single question and does not depend on any other question and given answers. In addition, the bias is constant over time. Clearly, locality refers here to the item, while in terms of test taker characteristics it is considered as a general and stable trait which is independent of the question context. From this perspective, it is considered as a global and constant candidate characteristics.
This characteristic feature is implemented as a Gaussian probability density distribution of adding or subtracting $n$ levels to the actual 'true' one. The shape of the distribution depends on the individual. This means that sharp distributions denote individuals with low biased behavior, while broad distributions denote individuals with large biased behavior. In addition, a second parameter is considered, which translates the distribution mean under or above the zero value mean.

A negative translation denotes an overall tendency to under-evaluate, a positive translation denotes a tendency to over-estimate, and no translation denotes an equal and symmetric tendency to under estimate oneself at some moments and over-estimate oneself at other moments. A very sharp distribution centered on the zero mean tends to correspond to an unbiased individual.

When generating a complete population of individuals, the simulator considers a population normally distributed with respect to the tendency to over-estimate and under estimate oneself (displacement of the Gaussian bias probability density mean over expertise levels) and with respect to the intensity of bias (broadness of the bias probability density). In practical terms, the population is characterized by two normal distributions: a normal distribution of the broadness parameters for the individual bias probability density, and a normal distribution of the translation values of the means of the individual bias probability density.

*4.2.2 Non-local rating distortion bias: over- or under-estimating oneself globally on a test*

Sometimes, the tendency to over- or under estimate oneself depends on the answers provided to previous questions. Purely considering expected answer distributions, this is revealed when, after a series of questions that received similar answers by the test taker, such as long series of 'yes', selection of distractor at similar positions, or selection of similar levels on a Likert Scale, people mistakenly tend to believe that such regular series are not probable by design. Consequently, they have the tendency to modify their next responses to lower the regularity in order to better restore their intuitive expectation. Considering this with over- or under estimation tendency, a similar attitude may appear when an individual has evaluated systematically himself high level (or low level) for a while in a test. At a certain moment in time, the regularity may be perceived questionable and the test taker may have the tendency to compensate by artificially disrupting the regularity, hence, by modifying his answer with respect to his actual situation.

These two example behaviors illustrate non-local biases. Such biases are qualified non-local, since they do not depend uniquely on the current question, but rather depend on the series of previous questions and answers. One can also call such non-local phenomena, high-order biases, in contrast to local biases that are first-order. The individual characteristics of a given test taker correspond to its sensitivity degree with respect to such a bias, and its perception and memory decay of the past series regularities. Considering only the decay function is actually sufficient to model the individual behavior since a rapid decay, technically faster than the test progression, eliminates the bias.

Detecting the regularity and triggering the bias

Before discussing the self-efficacy sentiment bias with a non-local contribution per se, in what follows, the detection of the regularity is first discussed. Modeling the decay of time series memorization and recognition is an intricate problem. Indeed, many aspects for which one has no or less knowledge may intervene, such as the decay type of function (log function? linear? quadratic?), the type of regularities and the corresponding biased responses (what are the types of the most perceived regularities?), the proximity of past events in the regularities (what is the noise tolerance?), the context encapsulation of the regularities (can an individual recall different series at once, how many, how long?), ...

In accordance with embodiments of the invention, a series of practical decisions and approximations are made. First, the detection of the series that triggers the biased response is considered. It is considered that the probability to detect a regularity is a function of the windowed length of the series of identical responses. Identical responses are: equal levels on a Likert Scale, same answer in 'yes/no' items, same position of the distractor in dichotomous score MCQ items, and other identical spatial aspects in other types of dichotomous scored items. Each test taker is characterized by a capacity to recall a certain number of successive events. It is also considered that the adjacency of events in the series is only temporal. In other words, the candidate does recall one series at a time, and does not create intertwined series of events pertaining to different contexts.

From a modeling point of view, the probability density depending on the length of the sequence is approximated as a linear function ranging between 0 at the first occurrence of the response pattern and its maximum when the maximum number of recallable elements is reached.

The maximum of the probability is a parameter of the individual. This creates a linear function of the probability to detect a regular series of answer during the test as a function of the number of successive equal responses. During the simulation, the probability then increases at each question if the current answer is the same as the previous ones until the maximum sequence length is attained. If a different answer is given, the probability drops to zero and a new window is instantiated. If the maximum number of recallable answers is attained and a similar answer is given again, then the probability is unchanged and corresponds to the maximum of the probability function for the given individual. In the used approximation, it is considered that the detection of the sequence triggers the bias.

Effective non-local rating distortion bias

When the sequence detection is triggered, the bias can occur in many ways. The candidate can either reinforce its natural tendency to over- or under estimate himself, or counter it. In terms of implementation, countering the tendency to over- or under estimate oneself consists in considering an additional probability distribution contribution in the distribution discussed for the local self-efficacy sentiment bias. To do so, the extra probability distribution to consider can be constructed by using the parameter that translates the probability distribution on the j level scale, with an opposite sign or not depending on the passed answer sequence and the given individual bias parameter sign. The combinations are illustrated in table III.

Table III. 3: Sign of the extra probability density component for non-local self-efficacy sentiment bias

| Local self-efficacy sentiment bias direction | 'yes'│ high level positive answers | 'no' │low level negative answers |
|---|---|---|
| *Overestimating* | Opposite sign | Same sign |
| *Underestimating* | Same sign | Opposite sign |

It is assumed that countering the trend would most probably be the observed behavior. As a consequence, this is the implementation chosen for implementing the non-local self-efficacy sentiment bias.

Another way to implement the non-local self-efficacy sentiment bias is to randomly select the response to the question irrespective of the sequence and the individual self-efficacy bias parameter.

*6.2.3 Central tendency bias*

When asked to position themselves on a scale, individuals have tendency to choose options lying in the middle of the scale. This occurs mostly when the scale is visible. As such, the central tendency bias is considered as a local bias appearing at each item individually without influence of the previous response. In addition, a non-local component might also appear. The non-local component is triggered after a series of high or low similar response. When such series appear, the candidate with central tendency will equilibrate its response by concentrating its response in the middle of the scale.

From a modeling point of view, the local central tendency bias can be represented by a normal probability density distribution centered on the mid-scale *j* value that adds a contribution to the self-efficacy sentiment bias.

The non-local central tendency bias is triggered at the same pace as the non-local self-efficacy sentiment bias, hence using the same function as already discussed above, and adds another contribution in the same form as the local central tendency one. Conceptually, it is difficult to disentangle the non-local contribution of central tendency from the contribution of non-local over- or under estimation. Indeed, countering a long sequence results in decentralizing the global evaluation. As a consequence, a separate non-local central tendency bias is not considered in the simulation.

*6.2.4 Global fatigue effect*

After a while when taking the test, a certain number of factors tend to create a fatigue effect. It is not the purpose to establish the cause factors of the fatigue effect, which can be related to the repetition of the task, induced by item similarity, the cognitive load of reading and understanding the items, etc... What can be observed is that, over time, the test taker concentration lowers and irrelevant, incorrect or random response rate increases.

From a modeling point of view, this phenomenon is represented by increasing a random component in the selection of the response as a function of time. In real situations, time is measured in seconds and thus the fatigue effect depends on the time taken to answer all previous questions.

In simulations, absolute answering time is not modeled, but time is only represented in terms of number of past questions. As such, and taking into account the definition of non-locality of biases presented above, one cannot consider the fatigue effect as purely non-local since it does not depends on previous answers, but only on time elapsed. In the context of embodiments according to the invention, the fatigue effect is thus better qualified as a global dynamic effect.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

**Claims**

1. A computer implemented method for gathering a user's response to a principal question or statement allowing a response that is mappable to a scale ranging from 0 to N, N being an integer, using a computer system, the method comprising the following steps:

   a) providing said principal question or statement in a memory element of said computer system;
   b) generating, using a dichotomous question or statement generator of said computer system starting from said principal question or statement, for each level 1 to N of said scale one dichotomous question or statement allowing a yes/no or true/false response, resulting in a set of N-1 dichotomous questions or statements, each one associated to one level of said scale, and storing said dichotomous questions or statements in a memory element of said computer system;
   c) sequentially displaying at least a subset of said dichotomous questions or statements on a display device of said computer system, together with a user prompt for providing a user's response into the computer system, and storing the user's responses to each displayed dichotomous question or statement in a memory element of the computer system;
   d) processing, using a processor of said computer system, the recorded responses to said displayed dichotomous questions or statements, in order to automatically conclude to the user's response to said principal question, and storing said answer in a memory element.

2. The computer implemented method of claim 1, wherein the sequencing of the displayed dichotomous questions or statements depends on the responses given by a user to previously displayed dichotomous questions or statements of the same set of dichotomous questions or statements.

3. The computer implemented method of one of claims 1 and 2, wherein the generated dichotomous questions or statements are displayed in a sequence corresponding to increasing levels of the scale to which they are associated.

4. The computer implemented method of one of claims 1 and 2, wherein the generated dichotomous questions or statements are displayed in a sequence so that depending on the positive or negative response to a previously displayed dichotomous question associated with a given level on the scale, the next dichotomous question that is displayed is one of the remaining unanswered dichotomous questions, which is associated with either a lower or higher level on the scale, respectively.

5. The computer implemented method of one of claims 1 and 2, wherein the generated dichotomous questions or statements are displayed in a sequence corresponding to increasing levels of the scale to which they are associated, and wherein the dichotomous question or statement associated with a given level of the scale is displayed only if all dichotomous questions or statements associated with lower levels of said scale have been answered with the same answer.

6. The computer implemented method of any one of claims 1 to 5, wherein the principal question relates to a state of a user to which the question is directed.

7. The computer implemented method of any one of claims 1 to 6, wherein the answers to a plurality of principal questions are gathered using steps a-d, and wherein the dichotomous questions or statements relating to a specific principal question are displayed interleaved in sequence with the dichotomous questions or statements relating to other principal questions of said plurality of principal questions.

8. The computer implemented method of claim 7, wherein the plurality of principal questions are automatically generated by a parser of said computer system from a textual competency document provided in a memory element of said computer system, the competency document providing a plurality of skill, knowledge, behavioral or technical requirements.

9. The computer implemented method of any one of claims 1 to 8, wherein the method is implemented as a Web service, which is accessible through a Web browser connected to said Web service using a communication network, said Web browser implementing the display device on which said dichotomous questions or statements, and said user prompt, are displayed.

10. A computer system, comprising:

one or more processors, system memory and one or more physical computer-readable media having stored thereon computer-executable instructions that, when executed by a processor, cause the computer system to carry out the method according to any one of claims 1 to 9.

11. The computer system of claim 10, further comprising one or more physical computer-readable media having stored thereon computer-executable instructions that, when executed by a processor, further cause the computer system to generate a questionnaire of principal questions using a parser of the computer system, from a textual competency document provided in a memory element of the computer system.

12. The computer system of one of claims 10 and 11, wherein the display means are connected to the processor via a communication network.

13. A computer program comprising computer-executable instructions, which, when executed by a processor of a computer system, cause that computer system to carry out the method according to any one of claims 1 to 9.

14. A device for questioning a user, comprising:

    - a computer data processing unit configured for executing the method according to any one of claims 1 to 9;
    - a display for displaying to the user the at least one subset of dichotomous questions or statements;
    - an input interface enabling the user to input responses to the displayed dichotomous questions or statements.

15. Device according to claim 14, wherein said device further comprises output means configured for outputting in a structured manner the results of the questioning.

Fig. 1

Fig. 2

Fig. 3

18

| | Europäisches Patentamt European Patent Office Office européen des brevets | **EUROPEAN SEARCH REPORT** | Application Number EP 16 20 7365 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/239405 A1 (BEHRENS CLIFFORD A [US] ET AL) 11 October 2007 (2007-10-11) <br> * paragraph [0008] - paragraph [0010] * <br> * paragraph [0015] * <br> * paragraph [0044] - paragraph [0048] * <br> ----- | 1-15 | INV. <br> G06Q10/10 <br><br> ADD. <br> G06Q10/06 |

TECHNICAL FIELDS SEARCHED (IPC)

G06Q

The present search report has been drawn up for all claims

| Place of search | Date of completion of the search | Examiner |
|---|---|---|
| The Hague | 2 May 2017 | Pomocka, Marek |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 7365

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2017

| Patent document cited in search report | Publication date | Patent family member(s) | Publication date |
|---|---|---|---|
| US 2007239405 A1 | 11-10-2007 | US 2007239405 A1<br>US 2010305915 A1 | 11-10-2007<br>02-12-2010 |

EPO FORM P0459

For more details about this annex : see Official Journal of the European Patent Office, No. 12/82